# EUROPEAN PATENT SPECIFICATION

(11) **EP 3 037 333 B1**
(45) Date of publication and mention of the grant of the patent: **22.05.2019**
(21) Application number: 13887499.5
(22) Date of filing: 19.06.2013
(51) Int. Cl.: B62K 5/027, B60L 15/20, B60W 10/08

(54) **AUTOMATIC THREE-WHEELED VEHICLE**
AUTOMATISCHES DREIRAD
VÉHICULE À TROIS ROUES AUTOMATIQUE

(43) Date of publication of application: 29.06.2016
(73) Proprietor: Electrike Japan Co., Ltd, Kawasaki-shi Kanagawa 211-0063 (JP)
(72) Inventor: CHIBA, Kazuo, Kawasaki-shi Kanagawa 211-0063 (JP)
(74) Representative: Weickmann & Weickmann PartmbB
(86) International application number: PCT/JP2013/066822
(87) International publication number: WO 2014/203345

(56) References cited:
- CN-U- 201 525 456
- JP-A- H08 268 248
- JP-A- H09 240 477
- JP-A- 2009 190 649
- JP-A- 2009 190 649
- US-A1- 2002 014 360

## Description

### TECHNICAL FIELD

This invention relates to a motor tricycle (which will be hereinafter simply also referred to as a tricycle).

### BACKGROUND ARTS

Compared with a bicycle, a motor tricycle permits a greater luggage loading capacity and is also superior to the bicycle in having a more satisfactory stability at the time when it is at a stop. Meanwhile, compared with a four-wheeled vehicle, the motor tricycle is smaller in luggage loading capacity, whereas it is superior to the four-wheeled vehicle in having a smaller turning radius.

Therefore, the tricycle is suited to transportation and delivery of beer bottles and heating oil or like heavy goods and/or tatamimats or like goods being too bulky to be loaded on the bicycle, in cases where it passes along a narrow street or the like.

For that reason, a relatively large-sized motor tricycle (with an overall height of about 150 cm, an overall width of about 120 cm and an overall length of about 250 cm, for instance) has been in widespread use from the 1950s through the 1960s. However, the motor tricycle of those days has been not good in cornering performance and has thus come into almost no use after that.

In this connection, the present inventor has focused on the above advantages of the motor tricycle and has already proposed a motor tricycle enhancing a cornering performance (See a patent document 1). Referring to the thus proposed motor tricycle with the help of reference numerals in the patent document 1, this motor tricycle has a vehicle body (10), a single front wheel (12) attached to the vehicle body (10) and steered by a handlebar (11), a pair of left and right rear wheels (14L, 14R) driven by an engine (13) mounted on the vehicle body (10), a pair of left and right swing arms (20L, 20R) provided with a differential gear box (15) and a power transmitting mechanism (or a chain 21 or the like) both adapted to transmission of power from the engine (13) to the left and right rear wheels (14L, 14R) respectively and for swingably supporting the left and right rear wheels (14L, 14R) to the vehicle body (10) respectively, a pair of left and right active suspensions (30L, 30R) for suspending the left and right swing arms (20L, 20R) to the vehicle body (10) respectively, a speed sensor (40) for detecting a travel speed of the vehicle body (10), a steering angle detection sensor (41) for detecting a steering angle of the handlebar (11) and a control unit (50) for, based on the vehicle body (10) travel speed detected by the speed sensor (40) and the handlebar (11) steering angle detected by the steering angle detection sensor (41), contracting the handlebar (11) steering direction-side active suspension while expanding the opposite active suspension, and permitting a greater expansion/contraction amount of the left/right active suspension to be provided, the greater the above steering angle is, and the higher the above travel speed is.

The above motor tricycle is such that when it turns to the right by turning the handlebar to the right, for instance, the control unit is operated so that the handlebar steering direction-side active suspension (or the right active suspension in this case) is contracted, while the opposite active suspension is expanded. Therefore, the vehicle body comes into rightward tilting. Further, the greater the handlebar steering angle is, and the higher the vehicle body travel speed is, the greater expansion/contraction amount of the left/right active suspension is obtained, so that the vehicle body leads to great tilting so much.

Consequently, a cornering performance is enhanced.

However, such motor tricycle has the disadvantage of being complicated in structure, because of the need of the differential gear box (15) and/or the active suspensions (30L, 30R).

In addition to the above, for attainment of an enhanced operability of a handlebar at the time of low speed turning, the present inventor has also proposed a motor tricycle in which between a handlebar shaft turned together with a handlebar and a steering shaft for fixing up a steering angle of a front wheel, there is provided a turning angle increasing mechanism for increasing a turning angle of the handlebar shaft to turn the steering shaft (See a patent document 2) . Referring to the thus proposed motor tricycle with the help of reference numerals in the patent document 2, this motor tricycle has a pair of left and right drive means (13L, 13R) for driving a pair of left and right rear wheels (14L, 14R) respectively, a steering angle detecting means for detecting a steering angle of a handlebar (11) and a control unit (50) for permitting the left and right rear wheels (14L, 14R) to be driven by the drive means (13L, 13R) in a normal mode that both the rear wheels are forward- or reverse-rotated, when the handlebar (11) steering angle detected by the steering angle detecting means is within a predetermined angle at the time of traveling or turning of a vehicle body (10), or alternatively, in a turning mode that one of the left and right rear wheels, that is, one rear wheel on the handlebar (11) turned side is stopped or reverse-rotated while the other rear wheel is forward-rotated, when the handlebar (11) steering angle detected by the steering angle detecting means is more than the predetermined angle.

Therefore, with the above motor tricycle, a turning performance at the time of low speed turning is enhanced, and besides, the effect of being easy to operate the handlebar at that time is obtained.

However, such motor tricycle is not given consideration in particular on a cornering performance at the time when it turns a curve in normal traveling.

### REFERENCE LITERATURES IN THE RELATED ARTS

### PATENT DOCUMENTS

Patent document 1: Publication of Japanese Unexamined Patent Application No. 2006-327244
Patent document 2: Publication of Japanese Unexamined Patent Application No. 2009-248887

### SUMMARY OF THE INVENTION

### PROBLEMS TO BE SOLVED BY THE INVENTION

The conventional motor tricycle having a single front wheel and two rear wheels tends to have a lot of understeer, which thus contributes to a degradation of the cornering performance.

The motor tricycle described in the above patent document 1 enables the enhanced cornering performance to be obtained with the differential gear and the active suspensions, whereas it has the disadvantage of being complicated in structure.

The motor tricycle described in the above patent document 2 is not given consideration in particular on the cornering performance at the time when it turns the curve in normal traveling
and thus has the disadvantage of causing a sense of understeer and also a greater transitional initial roll amount of the vehicle body, leading to an impression that the vehicle body is wobbling at the time of turning and lane change.

The closest prior art document US 2002/0014360 A1 discloses a three wheeled forklift having a vehicle body, a single rear wheel attached to the vehicle body, a pair of left and right front wheels driven in the front of said vehicle body, a pair of left and right drive means for driving said left and right front wheels respectively, a steering angle detecting means for detecting a steering angle and a speed detecting means, wherein the forklift further comprises a control unit adapted to perform control of a rotation speed ratio, wherein a rotation speed ratio is defined as the rotations of the outer wheel per one rotation of the inner wheel.

Accordingly, an object of the present invention is to provide a motor tricycle that enables a cornering performance to be enhanced without the use of any differential gear and any active suspension.

### MEANS FOR SOLVING THE PROBLEMS

The above object is solved according to the invention by a motor tricycle according to claim 1. A preferred embodiment of the invention is described in the dependent claim.

To solve the above problems, the present invention provides a motor tricycle having a vehicle body, a single front wheel attached to the vehicle body and steered by a handlebar, a pair of left and right rear wheels driven in the rear of the above vehicle body, a pair of left and right drive means for driving the above left and right rear wheels respectively, a steering angle detecting means for detecting a steering angle of the above handlebar and a speed detecting means for detecting a travel speed of the above vehicle body, the motor tricycle being characterized by having a control unit for performing, when the above travel speed is not less than a predetermined speed, and the above steering angle is not less than a predetermined angle, addition of an additional rotation speed ratio meeting the thus travel speed and the thus steering angle to an outer-wheel necessary rotation speed ratio being a rotation speed ratio obtained in accordance with the handlebar steering angle detected by the above steering angle detecting means on the assumption that no skid occurs between each of the above left and right rear wheels and a road surface at the time when the vehicle body turns a curve by the turning operation of the above handlebar, specifically, a rotation speed ratio to an inner wheel being one of the left and right rear wheels, that
is, one rear wheel in an inner position relative to the above curve, more specifically, a rotation speed ratio required for an outer wheel being the other rear wheel in an outer position relative to the above curve, and then permitting the above outer wheel to be driven by the above drive means with a rotation speed ratio resulting from the addition.

Assuming that no skid occurs between each of the above left and right rear wheels and the road surface at the time when the vehicle body turns the curve by the turning operation of the handlebar, the outer-wheel necessary rotation speed ratio, specifically, the rotation speed ratio to the inner wheel being one of the left and right rear wheels, that is, one rear wheel in the inner position relative to the curve, more specifically, the rotation speed ratio required for the outer wheel being the other rear wheel in the outer position relative to the curve, may be calculated based on the handlebar steering angle and a distance between the rear wheels.

Therefore, provided that no skid occurs between each rear wheel and the road surface at the time when the vehicle body turns the curve, or that the vehicle travel speed is very slow as much as about low speed, for instance, satisfactory traveling of the vehicle is obtained by driving the above outer wheel by the above drive means with the above outer-wheel necessary rotation speed ratio.

However, when the vehicle travel speed reaches the predetermined speed or more, and the steering angle reaches the predetermined angle or more, a skid occurs between each rear wheel and the road surface to cause the vehicle to be rolled (or understeered) outward relative to the curve by centrifugal force, so that the vehicle fails to cancel the understeer as far as the outer wheel is driven with the above outer-wheel necessary rotation speed ratio.

In contrast, with the motor tricycle according to the present invention, when the travel speed is not less than the predetermined speed, and the steering angle is not less than the predetermined angle, the above control unit is operated so that the additional rotation speed ratio meeting the thus travel speed and the thus steering angle is added to the above outer-wheel necessary rotation speed ratio, and the outer wheel is then driven by the drive means with the rotation speed ratio resulting from the addition, whereby the outer wheel comes to be excessively rotated by the amount of the additional rotation speed ratio.

Such excessive rotation of the outer wheel by the amount of the additional rotation speed ratio generates a yawing moment in the vehicle and thus provides an enhanced turning-round property of the vehicle, leading to a reduction in a sense of understeer.

Therefore, with the motor tricycle according to the present invention, a cornering performance may be enhanced without the use of any differential gear and any active suspension.

The above control unit is preferably arranged that when the above travel speed is not less than the predetermined speed, and the steering angle obtained by the leftward or rightward steering operation reaches the predetermined angle or more, another addition of a second additional rotation speed ratio to the above additional rotation speed ratio is performed from that time till a time when the operation of the above handlebar in the thus direction comes to an end.

Such arrangement of the control unit as described the above permits a greater yawing moment caused by the above second additional rotation speed ratio to be generated with respect to the rear wheels approximately just after a driver starts to turn the handlebar. Accordingly, a sense of delay in turning of the handlebar is made to restrain, resulting in attainment of stable turning with a sense of neutral steer.

### BRIEF DESCRIPTION OF THE DRAWINGS

FIG. 1 is a schematic illustration showing one embodiment of a motor tricycle according to the present invention, wherein FIG. 1(a) is a plan view, and FIG. 1(b) is a side view (or a front view of FIG. 1(a)).

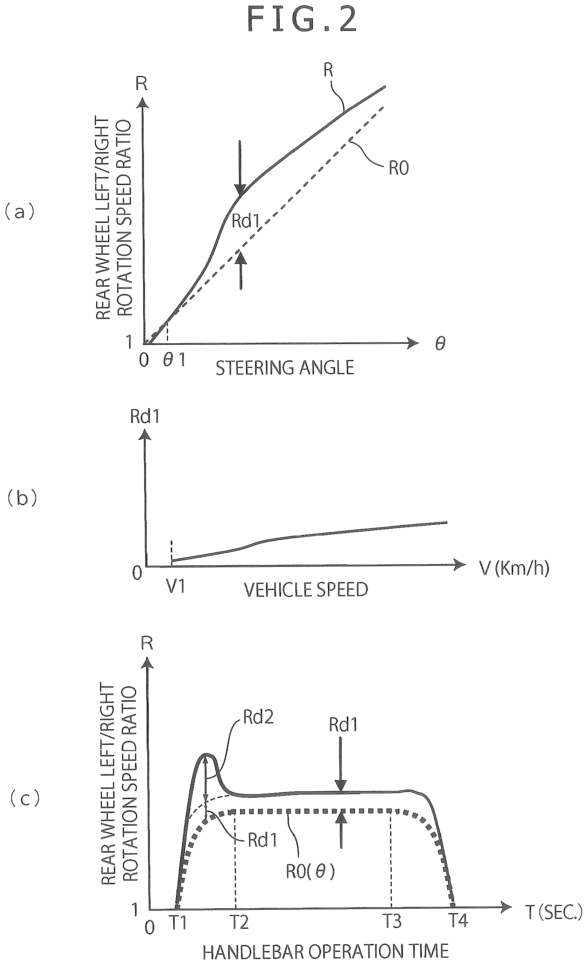

FIG. 2(a) is a graphic representation showing one instance of a relation between a steering angle *θ* and an outer-wheel necessary rotation speed ratio R0, an additional rotation speed ratio Rd1 and a rotation speed ratio R resulting from addition, FIG. 2(b) is a graphic representation showing one instance of a relation between a vehicle speed V and an additional rotation speed ratio Rd1, and FIG. 2(c) is a graphic representation showing one instance of a relation between a handlebar operation time T and an outer-wheel necessary rotation speed ratio R0, an additional rotation speed ratio Rd1, a second additional rotation speed ratio Rd2 and a rotation speed ratio R resulting from addition.
FIG. 3 is a diagram showing one instance of the whole of a system including a control unit.
FIGS. 4(a) and 4(b) are explanatory illustrations of action, respectively.

### MODE FOR EMBODYING THE INVENTION

Hereinafter will be described an embodiment of a motor tricycle according to the present invention with reference to the attached drawings.

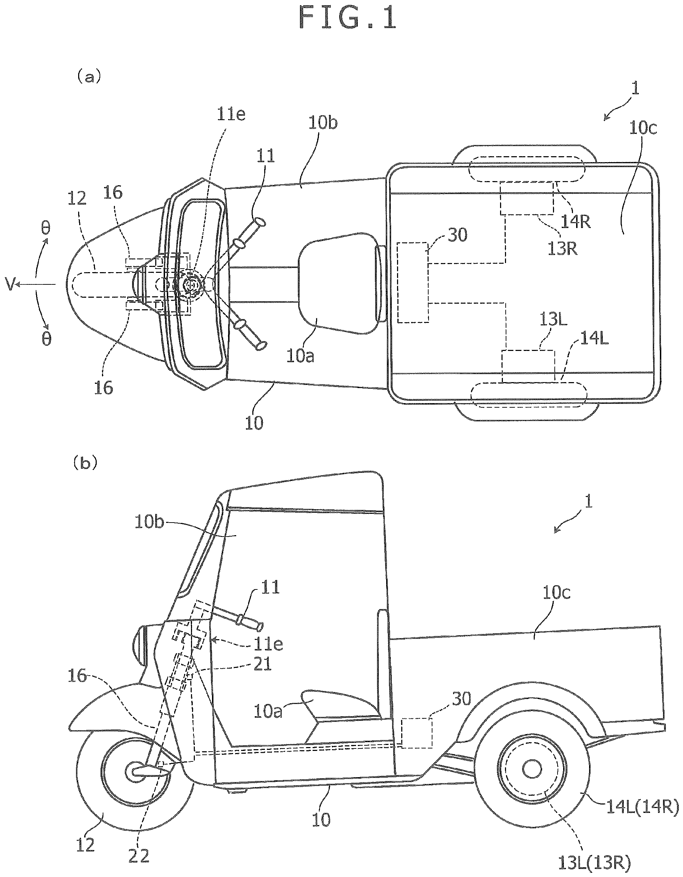

A motor tricycle 1 shown in FIG. 1 has a vehicle body 10, a single front wheel 12 attached to the vehicle body 10 and steered by a handlebar 11, a pair of left and right rear wheels 14L, 14R driven in the rear of the vehicle body 10, a pair of left and right drive means 13L, 13R for driving the left and right rear wheels 14L, 14R respectively, a steering angle detecting means 21 for detecting a steering angle *θ* of the handlebar 11, a speed detecting means 22 for detecting a travel speed V of the vehicle body 10 and a control unit 30.

The control unit 30 performs, when the above travel speed V is not less than a predetermined speed V1, and the above steering angle *θ* is not less a predetermined steering angle *θ* 1, addition of an additional rotation speed ratio Rd1 (See FIG. 2) meeting the thus travel speed V and the thus steering angle *θ* to an outer-wheel necessary rotation speed ratio R0 being a rotation speed ratio obtained in accordance with the handlebar-11 steering angle *θ* detected by the steering angle detecting means 21 on the assumption that no skid occurs between each of the left and right rear wheels 14L, 14R and a road surface at the time when the vehicle body 10 turns a curve by the turning operation of the handlebar 11, specifically, a rotation speed ratio to an inner wheel being one of the left and right rear wheels, that is, one rear wheel in an inner position relative to the above curve (specifically, the right rear wheel 14R in case of turning the right-hand curve, or alternatively, the left rear wheel 14L in case of turning the left-hand curve), more specifically, a rotation speed ratio required for an outer wheel, that is, the other rear wheel in an outer position relative to the above curve (specifically, the left rear wheel 14L in case of turning the right-hand curve, or alternatively, the right rear wheel 14R in case of turning the left-hand curve), and then permits the above outer wheel to be driven by the above drive means with a rotation speed ratio R resulting from the addition.

Assuming that no skid occurs between each of the left and right rear wheels 14L, 14R and the road surface at the time when the vehicle body 10 turns the curve by the turning operation of the handlebar 11, the outer-wheel necessary rotation speed ratio R0, specifically, the rotation speed ratio to the inner wheel, more specifically, the rotation speed ratio required for the outer wheel, may be calculated based on the steering angle *θ* of the handlebar 11 and a distance between the rear wheels. It is noted that as shown in FIG. 2(a), for instance, the outer-wheel necessary rotation speed ratio R0 is proportional to the steering angle *θ* of the handlebar 11.

Therefore, provided that no skid occurs between each rear wheel and the road surface at the time when the vehicle body turns the curve, or that the vehicle travel speed V is very slow as much as about low speed (or about 5 kilometers per hour), for instance, satisfactory traveling of the vehicle is obtained by driving the outer wheel by the drive means with the above outer-wheel necessary rotation speed ratio R0.

Namely, such satisfactory traveling of the vehicle is obtained by making 1 × R0 rotation of the outer wheel per one rotation of the inner wheel.

However, when the vehicle travel speed V reaches the predetermined speed V1 (or 5 kilometers per hour, for instance) or more, and the steering angle *θ* reaches the predetermined angle *θ* 1 (or five degrees, for instance) or more, a skid occurs between each rear wheel and the road surface to cause the vehicle to be rolled (or understeered) outward relative to the curve by centrifugal force, so that the vehicle fails to cancel the understeer as far as the outer wheel is driven with the above outer-wheel necessary rotation speed ratio R0.

In contrast, with the motor tricycle 1 according to the embodiment of the present invention, when the travel speed V is not less than the predetermined speed V1, and the steering angle *θ* is not less than the predetermined angle *θ* 1 as shown in FIGS. 2(a) and 2(b), for instance, the control unit 30 is operated so that the additional rotation speed ratio Rd1 meeting the thus travel speed V and the thus steering angle *θ* is added to the outer-wheel necessary rotation speed ratio R0, and the outer wheel is then driven by the drive means with the rotation speed ratio R (= R0 +Rd1) resulting from the addition, whereby the outer wheel comes to be excessively rotated by the amount of the additional rotation speed ratio Rd1.

Namely, the outer wheel comes into 1×R=1×(R0+Rd1) rotation per one rotation of the inner wheel.

Such excessive rotation of the outer wheel by the amount of the additional rotation speed ratio Rd1 generates a yawing moment in the vehicle and thus provides an enhanced turning-round property of the vehicle, leading to a reduction in a sense of understeer.

Therefore, with the motor tricycle 1 according to the embodiment of the present invention, a cornering performance may be enhanced without the use of any differential gear and any active suspension.

This will be discussed in more detail in the following.

In general, for securing a straight traveling stability of the vehicle, the basic characteristics of the vehicle are preferably set to have understeer to ensure the stability. However, with the motor tricycle, there are cases where unless control involving the addition of the above additional rotation speed ratio Rd1 is performed, a phenomenon (or a transitional roll) in which the vehicle body is transitionally rolled outward relative to the curve by the centrifugal force just after the handlebar is turned occurs notably, when the vehicle travel speed V reaches the predetermined speed or more, and the steering angle *θ* reaches the predetermined angle or more. For that reason, in such cases, the motor tricycle is poor in steering effectiveness and thus causes a greater time delay until the vehicle starts to turn round after the handlebar is turned, and as a result, a sense of incongruity is given to the driver.

In contrast, with the motor tricycle according to the embodiment of the present invention, temporal control of a turning-round torque is performed, wherein such alternative control as meeting the vehicle speed is also executable, so that a satisfactory dynamic performance is realizable by optimization in accordance with the vehicle characteristics and the conditions for use.

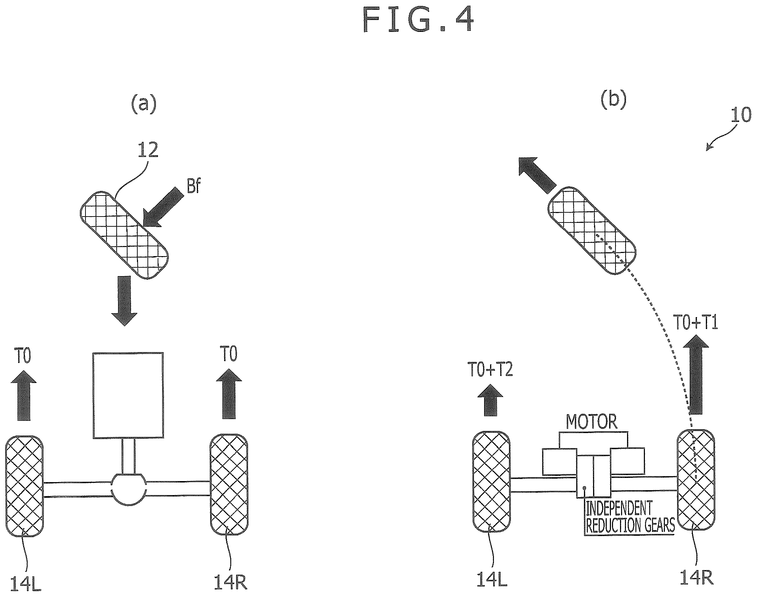

Incidentally, as for the motor tricycle when turning the curve, an action of turning the handlebar to the left as shown in FIG. 4(a), for instance, causes the same state as a breaking force Bf is given from the front right, and as a result, the vehicle body is liable to be easily overturned due to the occurrence of nose-dive toward the front right.

In this connection, with the motor tricycle 1 according to the embodiment of the present invention, when the travel speed V is not less than the predetermined speed, and the steering angle *θ* is not less than the predetermined angle, the control unit 30 performs, as for the outer wheel (the right rear wheel 14R shown in FIG. 4(b), for instance), addition of an additional torque T1 meeting the thus travel speed V and the thus steering angle *θ* to a left/right rear wheel drive torque T0 (See FIG. 4(a)) required to obtain the outer-wheel necessary rotation speed ratio being the rotation speed ratio obtained in accordance with the handlebar-11 steering angle *θ* detected by the steering angle detecting means 21 on the assumption that no skid occurs between each of the left and right rear wheels 14L, 14R and the road surface at the time when the vehicle body 10 turns the curve by the turning operation of the handlebar 11, specifically, the rotation speed ratio to the inner wheel being one rear wheel in the inner position relative to the above curve (specifically, the right rear wheel 14R in case of turning the right-hand curve, or alternatively, the left rear wheel 14L in case of turning the left-hand curve), and then permits the outer wheel to be driven with a torque (T0 + T1) resulting from the addition, while it performs, as for the inner wheel (specifically, the left rear wheel 14L shown in FIG. 4(b), for instance), subtraction of a speed-reduction torque T2 from the above drive torque T0 and then permits the inner wheel to be driven with a torque (T0-T2) resulting from the subtraction.

Such increase/decrease of the torque is reflected to the above inner/outer wheel rotation speed.

Namely, with the motor tricycle 1 according to the embodiment of the present invention, not only the cornering performance but also a cornering stability may be enhanced without the use of any differential gear and any active suspension.

The control unit 30 is further arranged that when the travel speed is not less than the predetermined speed V1, and the steering angle *θ* obtained by the leftward or rightward steering operation reaches the predetermined angle *θ* 1 or more, another addition of a second additional rotation speed ratio Rd2 to the above additional rotation speed ratio Rd1 is performed from that time T1 (See FIG. 2(c)) till a time T2 when the operation of the handlebar 11 in the thus direction (rightward, for instance) comes to an end.

Such arrangement of the control unit as described the above permits a greater yawing moment caused by the above second additional rotation speed ratio Rd2 to be generated with respect to the outer wheels approximately just after the driver starts to turn the handlebar 11. Accordingly, a sense of delay in turning of the handlebar 11 is made to restrain, resulting in attainment of stable turning with a sense of neutral steer.

As shown in FIG. 1, the handlebar 11 is provided with the front wheel 12 at the lower end of a pair of front forks 16 through a turning angle increasing mechanism 11e. The turning angle increasing mechanism 11e is to increase the turning angle of the handlebar 11 for rotating the front wheel 12. Such turning angle increasing mechanism 11e may be the same in structure as the turning angle increasing mechanism described in the above patent document 2.

The turning operation of the handlebar 11 becomes heavy by providing the turning angle increasing mechanism for the handlebar 11, in which case, however, such arrangement of the control unit that the addition of the second additional rotation speed ratio Rd2 is performed as described the above permits the greater yawing moment caused by the above second additional rotation speed ratio Rd2 to be generated with respect to the rear wheels approximately just after the driver starts to turn the handlebar 11, and as a result, a lightened turning operation of the handlebar 11 is obtained.

It is noted that referring to FIG. 2(c), T3 represents a time when the driver starts to return the handlebar 11 from the turned position (or from the rightward turned position to the neutral position, for instance), and T4 represents a time when the handlebar 11 is returned to the neutral position (*θ*=0). For the reason that the outer-wheel necessary rotation speed ratio R0 is proportional to the steering angle *θ* of the handlebar 11 as described the above, it may be possible also to replace a curve of the outer-wheel necessary rotation speed ratio R0 shown in FIG. 2 with that of the steering angle *θ*.

The motor tricycle 1 according to the embodiment of the present invention is of relatively large-sized type (with an overall height of about 150 cm, an overall width of about 120 cm and an overall length of about 250 cm, for instance).

The vehicle body 10 has at its front a driver's cab 10b provided with a driver's seat 10a, the handlebar 11, an accelerator, a brake and a shift lever (not shown) or the like, wherein the motor tricycle 1 is operated for travelling by the driver seated on the driver's seat 10a.

The shift lever may be a well known shift lever and is so formed as being capable of selecting, for instance, a drive wheel state such as a parking state [P] in which the drive wheels are locked at the time of parking, a reverse state [R] in which the drive wheels are reverse-rotated, a neutral state [N] in which no drive force is applied to the drive wheels and a drive state [D] in which the drive wheels are forward-rotated.

Therefore, the motor tricycle 1 according to the embodiment of the present invention may be basically operated like an ordinary automatic four-wheeled vehicle.

The vehicle body 10 has at its rear a luggage carrier 10c.

Each of the left and right drive means 13L, 13R for driving the rear wheels 14L, 14R respectively may be a well-known in-wheel motor, for instance. Alternatively, it may be possible also to drive the rear wheels with left and right driving motors through power transmitting mechanisms respectively.

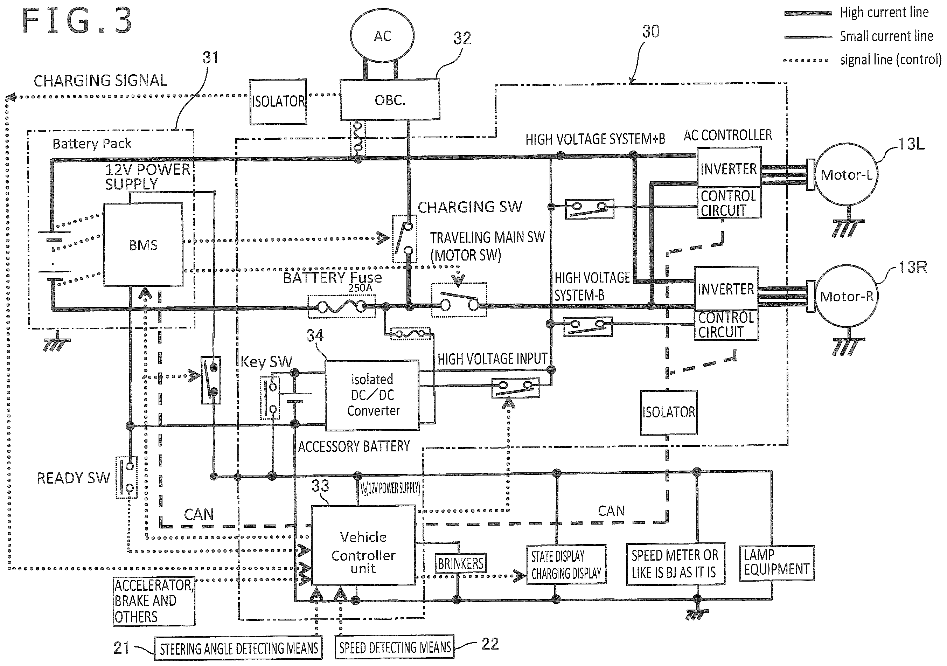

FIG. 3 is a systematic diagram illustrating one instance of a control system of the whole motor tricycle according to the embodiment of the present invention.

Referring to FIG. 3, reference numeral 31 denotes a battery pack having a main (or traveling) battery (specifically, a lithium ion battery, for instance) and a BMS (Battery Management System) that keeps a check on the main battery for each cell thereof.

Reference numeral 32 denotes an OBC (On Board Charge) that is a charging circuit for charging the battery of the battery pack 31 with a charging current supplied from an external power supply (specifically, AC 100V and/or 200V). Between the battery pack 31 and the OBC 32, there are interposed a minute resistance for detecting a battery current and a protecting fuse and/or an ON/OFF control relay.

Reference numeral 33 denotes a VCU (Vehicle Controller Unit) that is a control means for determining the operation of each part in response to the vehicle body conditions while receiving information on the operating conditions of driver-operated switches/pedal and/or display equipment. The VCU 33 and each part are interconnected via a signal line or the like.

To the VCU 33 are connected the above steering angle detecting means 21 and the above speed detecting means 22, wherein the VCU 33 drives, based on the detection results of these detecting means, the above left and right drive means (or motors) 13L, 13R through drive control circuits (or inverter controllers) thereof as described the above. The VCU 33 and the control circuits of the left and right drive means (or motors) 13L, 13R are interconnected via a CAN (Control Area Network) . The steering angle detecting means 21 may be a well-known angle sensor, and the speed detecting means 22 may be a well-known speed sensor.

The steering angle detecting means 21 according to the embodiment of the present invention is formed of a photosensor-type encoder to make discrimination of the steering direction (or between the leftward steering and the rightward steering) and detection of an angular displacement by means of optical processing. Such arrangement of the steering angle detecting means as described the above permits a displacement quantity (or the angular displacement) and a displacement direction (or the leftward/rightward displacement) to be detected with accuracy in a moment, so that input of the thus detected information into the VCU 33 follows that satisfactory left/right individual drive force control is obtained by reflecting accurate output control information to the left and right drive motors 13L, 13R without any time delay. Further, the photosensor-type encoder is superior to a variable resistance-type encoder and/or an electromagnetic effect-type encoder in resistance to electromagnetic noises and also has the advantage that any neutral-point and/or output-signal deterioration due to a change with the passage of time is rarely seen.

Reference numeral 34 denotes a DC/DC converter, through which a connection between an accessory battery and a traveling high-voltage power supply is made. The DC/DC converter 34 is a charging circuit of the accessory battery in a normal state . The accessory battery is charged with a charging current supplied from the battery pack 31 or an external power supply (via the OBC) through the DC/DC converter 34.

The accessory battery is a small-sized battery independently grounded in order to provide a confirmation of the vehicle conditions irrespective of the state of the main battery and may be a lead battery commonly used for automobiles.

### EXPLANATION OF REFERENCE NUMERALS

1: Motor tricycle
10: Vehicle body
11: handlebar
12: Front wheel
13(L, R): Drive means
14 (L, R): Rear wheel
21: Steering angle detecting means
22: Speed detecting means
30: Control unit
*θ* : Steering angle
V: Vehicle speed
R0: Outer-wheel necessary rotation speed ratio
Rd1: Additional rotation speed ratio
Rd2: Second additional rotation speed ratio
R: Rotation speed ratio resulting from addition

## Claims

1. A motor tricycle (1) having
a vehicle body (10),
a single front wheel (12) attached to the vehicle body (10) and steered by a handlebar (11),
a pair of left (14L) and right (14R) rear wheels driven in the rear of said vehicle body (10),
a pair of left (13L) and right (13R) drive means for driving said left (14L) and right (14R) rear wheels respectively,
a steering angle detecting means (21) for detecting a steering angle (θ) of said handlebar (11) and
a speed detecting means (22) for detecting a travel speed (V) of said vehicle body (10),
wherein an inner wheel is defined as one of the left (14L) and right (14R) rear wheels, that is, one rear wheel (14L, 14R) in an inner position relative to a curve, and
wherein an outer wheel is defined as the other rear wheel (14L, 14R) in an outer position relative to said curve;
wherein a rotation speed ratio is defined as the rotations of the outer wheel per one rotation of the inner wheel;
wherein the motor tricycle (1) further comprises a control unit (30) adapted to perform,
when said travel speed (V) is not less than a predetermined speed, and said steering angle is not less than a predetermined angle,
addition of an additional rotation speed ratio (Rd1) meeting the thus travel speed (V) and the thus steering angle (θ) to an outer-wheel necessary rotation speed ratio (R0) being a rotation speed ratio obtained in accordance with the handlebar steering angle (θ) detected by said steering angle detecting means (21) on the assumption that no skid occurs between each of said left (14L) and right (14R) rear wheels and a road surface at the time when said vehicle body (10) turns the curve by the turning operation of said handlebar (11), and
then to permit said outer wheel to be driven by said drive means (13L, 13R) with a rotation speed ratio resulting from the addition.

2. The motor tricycle (1) according to claim 1, wherein said control unit (30) is arranged that when said travel speed (V) is not less than the predetermined speed, and the steering angle (θ) obtained by the leftward or rightward steering operation reaches said predetermined angle or more, another addition of a second additional rotation speed ratio (Rd2) to said additional rotation speed ratio (Rd1) is performed from that time till a time when the operation of said handlebar (11) in the thus direction comes to an end.

## Patentansprüche

1. Motordreirad (1), welches aufweist
einen Fahrzeugkörper (10),
ein einzelnes vorderes Rad (12), welches an dem Fahrzeugkörper (10) angebracht ist und durch eine Griffstange (11) gelenkt ist,
ein Paar von linken (14L) und rechten (14R) hinteren Rädern, welche in der Rückseite des Fahrzeugkörpers (10) angetrieben sind,
ein Paar von linken (13L) und rechten (13R) Antriebsmitteln zum Antreiben der linken (14L) bzw. rechten (14R) hinteren Räder,
ein Lenkwinkel-Erfassungsmittel (21) zum Erfassen eines Lenkwinkels (θ) der Griffstange (11) und
ein Geschwindigkeit-Erfassungsmittel (22) zum Erfassen einer Fahrtgeschwindigkeit (V) des Fahrzeugkörpers (10),
wobei ein inneres Rad als eines aus den linken (14L) und rechten (14R) hinteren Rädern definiert ist, das heißt, ein hinteres Rad (14L, 14R) in einer inneren Position relativ zu einer Kurve, und
wobei ein äußeres Rad als das andere hintere Rad (14L, 14R) in einer äußeren Position relativ zu der Kurve definiert ist;
wobei ein Rotationsgeschwindigkeitsverhältnis als die Rotationen des äußeren Rads pro einer Rotation des inneren Rads definiert ist;
wobei das Motordreirad (1) ferner eine Regel-/Steuereinheit (30) umfasst, welche dazu eingerichtet ist, dass Folgende durchzuführen, wenn die Fahrtgeschwindigkeit (V) nicht geringer ist als eine vorbestimmte Geschwindigkeit und der Lenkwinkel nicht geringer ist als ein vorbestimmter Lenkwinkel,
eine Addition eines zusätzlichen Rotationsgeschwindigkeitsverhältnisses (Rd1), welches zu der derartigen Fahrtgeschwindigkeit (V) und dem derartigen Lenkwinkel (θ) passt, zu einem für ein äußeres Rad notwendigen Rotationsgeschwindigkeitsverhältnis (R0), welches ein Rotationsgeschwindigkeitsverhältnis ist, welches im Einklang mit dem Griffstangen-Lenkwinkel (θ) erhalten wird, welcher durch das Lenkwinkel-Erfassungsmittel (21) erfasst wird, unter der Annahme, dass kein Schlupf zwischen jedem aus den linken (14L) und rechten (14R) hinteren Rädern und einer Straßenfläche zu der Zeit auftritt, wenn der Fahrzeugkörper (10) die Kurve durch die Lenkbedienung der Griffstange (11) durchfährt, und
dann dem äußeren Rad zu erlauben, durch die Antriebsmittel (13L, 13R) mit einem Rotationsgeschwindigkeitsverhältnis angetrieben zu werden, welches aus der Addition resultiert.

2. Motordreirad (1) nach Anspruch 1, wobei die Regel-/Steuereinheit (30) dazu eingerichtet ist, dass, wenn die Fahrtgeschwindigkeit (V) nicht geringer ist als die vorbestimmte Geschwindigkeit und der Lenkwinkel (θ), welcher durch die Lenkbewegung nach links oder nach rechts erhalten wird, den vorbestimmten Winkel oder mehr erreicht, eine andere Addition eines zweiten zusätzlichen Rotationsgeschwindigkeitsverhältnisses (Rd2) zu dem zusätzlichen Rotationsgeschwindigkeitsverhältnis (Rd1) von der Zeit an bis zu einer Zeit durchgeführt wird, wenn die Bedienung der Griffstange (11) in der derartigen Richtung zu einem Ende kommt.

## Revendications

1. Tricycle à moteur (1) comportant
une carrosserie de véhicule (10),
une roue avant unique (12) fixée à la carrosserie de véhicule (10) et dirigée par un guidon (11),
une paire de roues arrière gauche (14L) et droite (14R) entraînées à l'arrière de ladite carrosserie de véhicule (10),
une paire de moyens d'entraînement gauche (13L) et droit (13R) pour entraîner lesdites roues arrière gauche (14L) et droite (14R) respectivement,
un moyen de détection d'angle de braquage (21) pour détecter un angle de braquage (θ) dudit guidon (11) et
un moyen de détection de vitesse (22) pour détecter une vitesse de déplacement (V) de ladite carrosserie de véhicule (10),
dans lequel une roue interne est définie en tant que l'une des roues arrière gauche (14L) et droite (14R), c'est-à-dire, une roue arrière (14L, 14R) dans une position interne par rapport à un virage, et
dans lequel une roue externe est définie en tant que l'autre roue arrière (14L, 14R) dans une position externe par rapport audit virage ;
dans lequel un rapport de vitesse de rotation est défini en tant que rotations de la roue externe par rotation de la roue interne ;
dans lequel le tricycle à moteur (1) comprend en outre une unité de commande (30) adaptée pour réaliser,
lorsque ladite vitesse de déplacement (V) n'est pas inférieure à une vitesse prédéterminée, et ledit angle de braquage n'est pas inférieur à un angle prédéterminé, l'addition d'un rapport de vitesse de rotation additionnel (Rd1) satisfaisant cette vitesse de déplacement (V) et cet angle de braquage (θ) à un rapport de vitesse de rotation nécessaire de roue externe (R0) qui est un rapport de vitesse de rotation obtenu conformément à l'angle de braquage de guidon (θ) détecté par ledit moyen de détection d'angle de braquage (21) en supposant qu'aucun dérapage ne se produit entre chacune desdites roues arrière gauche (14L) et droite (14R) et une surface de route au moment où ladite carrosserie de véhicule (10) prend le virage par l'opération de virage dudit guidon (11) et
pour permettre ensuite à ladite roue externe d'être entraînée par ledit moyen d'entraînement (13L, 13R) avec un rapport de vitesse de rotation résultant de l'addition.

2. Tricycle à moteur (1) selon la revendication 1, dans lequel ladite unité de commande (30) est conçue de sorte que, lorsque ladite vitesse de déplacement (V) n'est pas inférieure à la vitesse prédéterminée, et l'angle de braquage (θ) obtenu par les opérations de braquage vers la gauche ou vers la droite atteint ledit angle prédéterminé ou plus, une autre addition d'un second rapport de vitesse de rotation additionnel (Rd2) audit rapport de vitesse de rotation additionnel (Rd1) soit réalisée depuis ce moment jusqu'à un moment où l'opération dudit guidon (11) dans cette direction prend fin.
